# EUROPEAN PATENT APPLICATION

(11) **EP 4 570 836 A1**
(43) Date of publication of application: **18.06.2025**
(21) Application number: 23307223.0
(22) Date of filing: 15.12.2023
(51) Int. Cl.: C08F 220/18, C08F 2/30, C08F 2/26, C09J 7/38, C09J 133/06

(54) **AQUEOUS DISPERSION**

(71) Applicant: ARKEMA FRANCE, 92800 Puteaux (FR)
(72) Inventor: LUGLI, Mario, 42022 BORETTO (IT); SAIJA, Leo-Mario, 42011 BAGNOLO IN PIANO (IT); PREMOLI, Andrea, 42022 BORETTO (IT); PERINO, Luca, 42022 BORETTO (IT); FERRETTI, Simona, 42022 BORETTO (IT)
(74) Representative: Arkema Patent

(57) **Abstract**

The invention relates to an aqueous dispersion of polymer particles obtained by emulsion polymerization of a monomeric mixture comprising:
- a) between 50 wt% and 90 wt% of a C4-C8 alkyl acrylate,
- b) between 2 wt% and 15 wt% of a vinyl aromatic monomer selected from styrene, o-methylstyrene, m-methylstyrene, p-methylstyrene, α-methylstyrene, o-ethylstyrene, m-ethylstyrene, p-ethylstyrene, p-tert-butylstyrene, o-methyl-p-isopropylstyrene, p-chlorostyrene, p-bromostyrene, o,p-dichlorostyrene, o,p-dibromostyrene, o-methoxystyrene, m-methoxystyrene, p-methoxystyrene, optionally substituted vinylnaphthalenes, 2-vinyl anthracene, and mixtures thereof,
- c) between 2 wt% and 20 wt% of a C1-C2 alkyl (meth)acrylate,
- d) between 1 wt% and 15 wt% of a hydroxy C2-C8 alkyl (meth)acrylate,
- e) between 1 wt% and 5 wt% of an ethylenically unsaturated polycarboxylic acid and/or a salt thereof, and
- f) optionally up to 30 wt% of an ethylenically unsaturated monomer different from a), b), c), d) and e) as defined above,

wherein the aqueous dispersion further comprises a surfactant mixture comprising a monoester sulfosuccinate salt, a diester sulfosuccinate salt and an ethoxylated and/or propoxylated non-ionic surfactant,
the weight percentages being with respect to the total weight of the monomeric mixture.

The invention also relates to a process for preparing the aqueous dispersion according to the invention, an adhesive composition comprising said aqueous dispersion and its uses, and an article or a multilayer system comprising the adhesive composition.

The invention also relates to a self-adhesive product obtainable from the multilayer system according to the invention.

Finally, the invention relates to a process for recycling an article comprising the adhesive composition according to the invention.

## Description

### TECHNICAL FIELD

The present invention relates to an aqueous dispersion, a process for preparing the aqueous dispersion, an adhesive composition and its uses, an article, a multilayer system, a self-adhesive product and a process for recycling an article.

### TECHNICAL BACKGROUND

Nowadays, one aim is to develop a circular economy, increasing the needs to recycle all the containers and boxes. For this reason, the demand of paper and plastic labels able to be easily detached before the recycling operations, for obtaining higher quality recycled materials, is increasing more and more. Generally, labelled containers are immersed in a basic aqueous solution maintained at about 80°C to debond the label from the container. In order to avoid high energy consumption, it would be desirable to perform the washing operations at lower temperatures, preferably at most 50°C. Furthermore, it would be preferable to avoid using dangerous chemicals such as multilayer thermal shrinkable plastic films or alkyl amine or other dangerous chemicals and using only substances approved for food contact (FDA 175.105, EN10-2011).

The present invention aims at providing an aqueous dispersion for making an adhesive, in particular a pressure sensitive adhesive (PSA), useful to manufacture paper or plastic tapes and labels. The adhesive should have a good balance between cohesion and adhesion. Furthermore, the invention aims at providing an adhesive having an improved detachability from the substrate to which it is bonded, after a washing operation, preferably at a temperature of at most 50°C. In particular, the present invention aims at providing paper and/or plastic self-adhesive labels which can be easily and quickly detached from a substrate during the washing operation, improving their recyclability.

### SUMMARY OF THE INVENTION

The invention relates to an aqueous dispersion of polymer particles obtained by emulsion polymerization of a monomeric mixture comprising:
- a) between 50 wt% and 90 wt% of a C4-C8 alkyl acrylate,
- b) between 2 wt% and 15 wt% of a vinyl aromatic monomer selected from styrene, o-methylstyrene, m-methylstyrene, p-methylstyrene, α-methylstyrene, o-ethylstyrene, m-ethylstyrene, p-ethylstyrene, p-tert-butylstyrene, o-methyl-p-isopropylstyrene, p-chlorostyrene, p-bromostyrene, o,p-dichlorostyrene, o,p-dibromostyrene, o-methoxystyrene, m-methoxystyrene, p-methoxystyrene, optionally substituted vinylnaphthalenes, 2-vinyl anthracene, and mixtures thereof,
- c) between 2 wt% and 20 wt% of a C1-C2 alkyl (meth)acrylate,
- d) between 1 wt% and 15 wt% of a hydroxy C2-C8 alkyl (meth)acrylate,
- e) between 1 wt% and 5 wt% of an ethylenically unsaturated polycarboxylic acid and/or a salt thereof, and
- f) optionally up to 30 wt% of an ethylenically unsaturated monomer different from a), b), c), d) and e) as defined above,

wherein the aqueous dispersion further comprises a surfactant mixture comprising a monoester sulfosuccinate salt, a diester sulfosuccinate salt and an ethoxylated and/or propoxylated non-ionic surfactant,
the weight percentages being with respect to the total weight of the monomeric mixture.

The invention also relates to a process for preparing the aqueous dispersion according to the invention comprising emulsion polymerization of a monomeric mixture to obtain polymer particles, said polymerization comprising:
- emulsifying the monomeric mixture in water with at least one surfactant of a surfactant mixture to provide a monomeric pre-emulsion, then
- contacting the monomeric pre-emulsion with an initiator,

wherein the monomeric mixture and the surfactant mixture are as described for the aqueous dispersion according to the invention, and
wherein each of the surfactants of the surfactant mixture is implemented during the emulsion polymerization and/or after the emulsion polymerization.

Furthermore, the invention relates to an adhesive composition comprising the aqueous dispersion according to the invention.

In addition, the invention relates to the use of the adhesive composition according to the invention as a pressure sensitive adhesive or as a water-debondable pressure sensitive adhesive.

The invention further relates to an article or a multilayer system, both comprising the adhesive composition according to the invention.

The invention also relates to a self-adhesive product obtainable from the multilayer system according to the invention.

Finally, the invention relates to a process for recycling an article comprising the adhesive composition according to the invention, said composition bonding at least two substrates of the article, comprising a step of immersing the article in a warm aqueous solution and a step of debonding the substrates bonded by the adhesive composition.

The present invention makes it possible to address the needs mentioned above. In particular, the aqueous dispersion according to the invention surprisingly makes it possible to obtain an adhesive having a high peel strength (in particular greater than or equal to 2.0 N/25.4mm), while being easily and quickly detached from a substrate to which it is bonded after a washing step, even at temperatures of at most 50°C.

Therefore, the present invention makes it possible to provide labels and tapes which can be easily and quickly debonded, and thus improving recycling processes.

In addition, the present invention does not need to implement dangerous chemicals such as multilayer thermal shrinkable plastic films or alkyl amine or other dangerous chemicals, and can be carried out by using only substances approved for food contact.

### DESCRIPTION OF THE INVENTION

### Aqueous dispersion

By "aqueous dispersion of polymer particles", it is intended a polyphasic system comprising polymer particles dispersed in an aqueous phase. Another term commonly used for characterizing an aqueous dispersion of polymer particles is "latex".

A dispersion having a liquid organic phase may be referred to as an emulsion. A dispersion having a solid or semi-solid organic phase may be referred to as a colloidal suspension. In the field of polymers, such colloidal suspensions are also inaccurately referred to as emulsions, and the process for preparing them is called emulsion polymerization.

The aqueous phase is a liquid comprising water. Said liquid may further comprise organic solvents, such as ethanol. However, the aqueous phase is preferably substantially free of organic solvents, for example less than 2% by weight of organic solvent based on the total weight of the aqueous phase, more preferably less than 1% by weight, even more preferably 0% by weight.

The aqueous dispersion may have a solids content of 30% to 70% by weight with respect to the total weight of the dispersion, in particular 40% to 65% by weight, more particularly 45% to 60% by weight. The solids content may be determined according to ISO 3251, for example as described in Example 1 below.

Unless otherwise stated, standards mentioned throughout the present application are those in effect on the date the application is filed.

In the context of the invention, the ranges of values are understood to be inclusive. For example, the range "between 0% and 25%" includes, in particular, the values 0% and 25%.

The polymer particles may exhibit a particle size of 50 nm to 1000 nm, preferably 80 nm to 500 nm, more preferably 110 nm to 400 nm. The particle size may be determined by dynamic light scattering (e.g. by a unimodal average analysis in intensity), for example with a Malvern ZS90 instrument.

According to an embodiment, the polymer particles may exhibit a polymodal particle size distribution. Such a distribution may advantageously be used when the solids content of the aqueous dispersion is higher than 60% in order to reduce the viscosity of the aqueous dispersion. For example, it is possible to create a new generation of particles by adding a seed. Further conditions for a polymodal distribution can be found in WO 02/092637.

The aqueous dispersion may have a viscosity comprised between 10 mPa.s and 3000 mPa.s, preferably between 50 mPa.s and 1000 mPa.s. The viscosity may be measured according to ISO 2555, for example as described in Example 1 below.

The aqueous dispersion (once dried) may exhibit a glass transition temperature (Tg) of at most -10°C, preferably at most -20°C, more preferably at most -25°C. For example, the Tg of the (dried) aqueous dispersion may be between -65°C and -10°C preferably -50°C to -20°C, more preferably -48°C to -25°C. The Tg may be determined by Differential Scanning Calorimetry (DSC), for example as described in Example 1 below.

The pH of the polymer dispersion may be adjusted between 3.5 and 8.5, in particular between 4.5 and 6.5. The pH may be measured according to ISO 976.

### Monomeric mixture

The polymer particles in the aqueous dispersion according to the invention are obtained from a monomeric mixture comprising monomers as defined below. In other words, the polymer particles comprise polymerized units derived from the monomers of the monomeric mixture.

The monomeric mixture consists of monomers (in particular ethylenically unsaturated monomers), preferably of monomers a), b), c), d), e) and optionally f) as defined below. Therefore, when calculating the total weight of the monomeric mixture, ingredients other than monomers (such as surfactants) are not taken into account.

### • Monomer a)

The monomeric mixture comprises between 50 wt% and 90 wt% of a C4-C8 alkyl (meth)acrylate with respect to the total weight of the monomeric mixture, preferably between 65 wt% and 90 wt%, more preferably between 75 wt% and 85 wt%.

As used herein, the term "(meth)acrylate" means methacrylate or acrylate.

As used herein, the word "a" or "an" means one or more.

As used herein, the term "CX-CY alkyl (meth)acrylate" means an alkyl ester of (meth)acrylic acid wherein the alkyl bears from X to Y carbon atoms.

Advantageously, the monomer a) is selected from n-butyl (meth)acrylate, 2-ethylhexyl (meth)acrylate, 2-octyl (meth)acrylate, isooctyl (meth)acrylate, n-octyl (meth)acrylate, and mixtures thereof, preferably n-butyl acrylate, 2-ethylhexyl acrylate, 2-octyl acrylate, isooctyl acrylate, n-octyl acrylate, and mixtures thereof, more preferably n-butyl acrylate, 2-ethylhexyl acrylate, and mixtures thereof, in particular 2-ethylhexyl acrylate.

### • Monomer b)

The monomeric mixture comprises between 2 wt% and 15 wt% of a vinyl aromatic monomer b) with respect to the total weight of the monomeric mixture, preferably between 3 wt% and 10 wt%, more preferably between 3.5 wt% and 8 wt%.

The monomer b) is selected from styrene, o-methylstyrene, m-methylstyrene, p-methylstyrene, α-methylstyrene,o-ethylstyrene, m-ethylstyrene, p-ethylstyrene, p-tert-butylstyrene, o-methyl-p-isopropylstyrene, p-chlorostyrene, p-bromostyrene, o,p-dichlorostyrene, o,p-dibromostyrene, o-methoxystyrene, m-methoxystyrene, p-methoxystyrene, optionally substituted vinylnaphthalenes, 2-vinyl anthracene, and mixtures thereof. Preferably, the monomer b) is selected from styrene, o-methylstyrene, m-methylstyrene, p-methylstyrene, and mixtures thereof, in particular styrene.

### • Monomer c)

The monomeric mixture comprises between 2 wt% and 20 wt% of a C1-C2 alkyl (meth)acrylate with respect to the total weight of the monomeric mixture, preferably between 6 wt% and 16 wt%, more preferably between 8 wt% and 13 wt%.

The monomer c) may be selected from methyl (meth)acrylate, ethyl (meth)acrylate, and mixtures thereof, preferably methyl methacrylate, ethyl methacrylate, and mixture thereof, in particular methyl methacrylate.

### • Monomer d)

The monomeric mixture comprises between 1 wt% and 15 wt% of a hydroxy C2-C8 alkyl (meth)acrylate with respect to the total weight of the monomeric mixture, preferably between 1.0 wt% and 10 wt%, more preferably between 1.5 wt% and 8 wt%.

As used herein, the term "hydroxy C2-C8 alkyl (meth)acrylate" means a C2-C8 alkyl (meth)acrylate comprising one or more hydroxy groups.

Advantageously, the monomer d) is selected from hydroxyethyl (meth)acrylate, hydroxypropyl (meth)acrylate, hydroxybutyl (meth)acrylate, and mixtures thereof, preferably 2-hydroxyethyl (meth)acrylate, 3-hydroxypropyl (meth)acrylate, 4-hydroxybutyl (meth)acrylate, and mixtures thereof, more preferably 2-hydroxyethyl methacrylate, 3-hydroxypropyl methacrylate, 4-hydroxybutyl methacrylate, and mixtures thereof, in particular 2-hydroxyethyl methacrylate.

### • Monomer e)

The monomeric mixture comprises between 1 wt% and 5 wt% of an ethylenically unsaturated polycarboxylic acid and/or a salt thereof with respect to the total weight of the monomeric mixture, preferably between 1.0 wt% and 3.5 wt%, more preferably between 1.1 wt% and 2.5 wt%.

As used herein, the term "ethylenically unsaturated" means comprising a polymerizable carbon-carbon double bond. A polymerizable carbon-carbon double bond is a carbon-carbon double bond that can react with another carbon-carbon double bond in a polymerization reaction. The carbon-carbon double bonds of a phenyl ring are not considered as polymerizable carbon-carbon double bonds.

As used herein, the term "polycarboxylic acid" means comprising two or more carboxylic acid (-C(=O)OH) groups.

Advantageously, the monomer e) is an ethylenically unsaturated dicarboxylic acid and/or a salt thereof (in particular dicarboxylates (having two -COO⁻ groups) with an alkali metal as the counterion, such as sodium). The ethylenically unsaturated dicarboxylic acid may be selected from maleic acid, dimethylmaleic acid, fumaric acid, itaconic acid, tetrahydrophthalic acid, citraconic acid, mesaconic acid, and mixtures thereof, preferably from maleic acid, fumaric acid, itaconic acid, and mixtures thereof, in particular itaconic acid.

### • Monomer f)

The monomeric mixture optionally comprises up to 30 wt% of an ethylenically unsaturated monomer f) (different from the monomers a), b), c), d) and e) as defined above) with respect to the total weight of the monomeric mixture, preferably up to 20 wt%, more preferably up to 10 wt%.

The monomer f) preferably comprises an ethylenically unsaturated group selected from acryloyl (-C(=O)-CH=CH₂), methacryloyl (-C(=O)-C(CH₃)=CH₂), vinyl (-CH=CH₂), crotyl (-CH=CH(CH₃)) or allyl (-CH₂-CH=CH₂).

The monomer f) may comprise a functional group selected from hydroxy, ketone, aldehyde, ester, acetoacetoxy, acetoacetamide, 1,1-dimethyl-3-oxobuyl, glycidyl ether, amino (-NH₂), alkylamino and/or dialkylamino (-NHR and/or -NR₂ with R being alkyl), cyano (-CN), a heterocycle with one or more nitrogen ring atoms, alkoxysilane, one carboxylic acid (-COOH) group or carboxylate (-COO⁻) group, a phosphonic acid (-P(=O)(OH)₂) group, a phosphonate group (-P(=O)(OR)₂, wherein one R is a counterion or an optionally substituted hydrocarbyl, and the other R is a counterion, a hydrogen atom, or an optionally substituted hydrocarbyl), a sulfonic acid (-S(=O)₂OH) group, a sulfonate group (-S(=O)₂(OR), wherein R is a counterion or an optionally substituted hydrocarbyl), a phosphate group (-O-P(=O)(OR)₂, each R being independently a counterion, a hydrogen atom, or an optionally substituted hydrocarbyl), and mixtures thereof.

For example, the monomer f) may be selected from glycidyl (meth)acrylate, acetoacetoxyethyl (meth)acrylate, acetoacetoxypropyl (meth)acrylate, acetoacetobutyl (meth)acrylate, allyl ester of maleic acid, allyl glycidyl ether, 2,3-di(acetoacetoxy)propyl (meth)acrylate, diacetone (meth)acrylate, acetonyl (meth)acrylate, allyl acetoacetate, vinyl acetoacetate, allyl (meth)acrylate, diallyl (meth)acrylate, diallyl ester of maleic acid, poly(allyl glycidyl ether), vinyl acrylate, divinyl benzene, ethylene glycol di(meth)acrylate, diallyl phthalate, hexanediol diacrylate, trimethylolpropane tri(meth)acrylate, pentaerythritol triallyl ether, dicyclopentenyl oxyethyl methacrylate, glycerol triacrylate, methylvinylketone, ethylvinylketone, butylvinylketone, (meth)acroleine, crotonaldehyde, formylstyrene, N,N-dimethylacrylamide, diacetone acrylamide, 2-aminoethyl (meth)acrylate, alkyl crotonates, (meth)acrylonitrile, diacetoneacrylamide, (meth)acrylamide, N-methylol(meth)acrylamide, t-butyl aminoethyl methacrylate, dimethylaminoethyl methacrylate, diethylaminoethyl methacrylate, N,N-dimethylaminopropyl methacrylamide, 2-t-butylaminoethyl methacrylate, N,N-dimethylaminoethylacrylate, N-(2-methacryloyloxyethyl)ethylene urea, methacrylamidoethylethylene urea, vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, gamma-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyltris(2-methoxyethoxy)silane, (meth)acrylic acid, 2-chloroacrylic acid, vinyl phosphonic acid, vinyl sulfonic acid, p-styrene carboxylic acid, p-styrene sulfonic acid, crotonic acid, 3-butenoic acid, 2-carboxyethyl acrylate, sodium 2-acrylamido-2-methyl propane sulfonate, sodium vinyl sulfonate, sodium (meth)allyl sulfonate, sodium 1-allyloxy-2-hydroxypropane sulfonate, a phosphate ester of alkyl (meth)acrylate, a phosphate ester of alkyl (meth)acrylamide, a phosphate ester of alkyl crotonate, a phosphate ester of alkyl maleate, a phosphate ester of alkyl fumarate, a phosphate diester of alkyl (meth)acrylate, a phosphate diester of alkyl crotonate, vinyl phosphate, (meth)allyl phosphate, a phosphate ester of polypropylene glycol mono(meth)acrylate, a phosphate ester of polyethylene glycol mono(meth)acrylate, a phosphate ester of polyoxyethylene allyl ether, a vinyl ester of a C2-C20 carboxylic acid (e.g. vinyl acetate, vinyl propionate, vinyl hexanoate, vinyl 2-ethylhexanoate, vinyl octanoate, vinyl pelargonate, vinyl laurate, vinyl stearate, vinyl esters of versatic acid, etc.), and mixtures thereof.

Preferably, the monomer f) is selected from ethylenically unsaturated alkoxysilanes, carbonyl-substituted (meth)acryloyl monomers, carbonyl-substituted vinyl monomers, carbonyl-substituted crotyl monomers, carbonyl-substituted allyl monomers, and mixtures thereof, more preferably from ethylenically unsaturated alkoxysilanes, carbonyl-substituted (meth)acryloyl monomers, and mixtures thereof. In particular, the monomer f) may be selected from acetoacetoxyethyl (meth)acrylate, acetoacetoxypropyl (meth)acrylate, acetoacetobutyl (meth)acrylate, 2,3-di(acetoacetoxy)propyl (meth)acrylate, vinyl trimethoxysilane, vinyl diimethoxymethylsilane, vinyl triethoxysilane, vinyl tripropoxysilane, vinyl triisopropoxysilane, vinyl tributoxysilane, gamma-methacryloxypropyl trimethoxysilane, 3-methacryloxypropylmethyl dimethoxysilane, methacryloxymethyl trimethoxysilane, and mixtures thereof.

### • Other features of the monomeric mixture

According to an embodiment, the monomeric mixture comprises:
- a) between 75 wt% and 85 wt% of a C4-C8 alkyl acrylate, the C4-C8 alkyl acrylate being preferably selected from n-butyl acrylate, 2-ethylhexyl acrylate, and mixtures thereof,
- b) between 3.5 wt% and 8 wt% of a vinyl aromatic monomer preferably selected from styrene, o-methylstyrene, m-methylstyrene, p-methylstyrene, and mixtures thereof,
- c) between 8 wt% and 13 wt% of a C1-C2 alkyl (meth)acrylate, the C1-C2 alkyl (meth)acrylate being preferably selected from methyl methacrylate, ethyl methacrylate, and mixture thereof,
- d) between 1.5 wt% and 8 wt% of a hydroxy C2-C8 alkyl (meth)acrylate, the hydroxy C2-C8 alkyl (meth)acrylate being preferably selected from 2-hydroxyethyl methacrylate, 3-hydroxypropyl methacrylate, 4-hydroxybutyl methacrylate, and mixtures thereof,
- e) between 1.1 wt% and 2.5 wt% of an ethylenically unsaturated polycarboxylic acid and/or a salt thereof, said polycarboxylic acid being preferably selected from maleic acid, fumaric acid, itaconic acid, and mixtures thereof, and
- f) optionally up to 10 wt% of an ethylenically unsaturated monomer different from a), b), c), d) and e) as defined above, said monomer f) being preferably selected from ethylenically unsaturated alkoxysilanes, carbonyl-substituted (meth)acryloyl monomers, and mixtures thereof,
the weight percentages being with respect to the total weight of the monomeric mixture.

Preferably, the monomeric mixture consists essentially of the monomers mentioned above. By "consists essentially of", it is intended that the monomeric mixture comprises less than 5 % by weight of monomers other than the aforementioned monomers, relative to the total weight of the monomeric mixture, preferably less than 2% by weight, even more preferably less than 1% by weight.

The monomers of this embodiment and their particular contents are as described above, including the embodiments and preferred features.

The amount of monomeric mixture implemented for obtaining the polymer particles may be comprised between 28 % and 66 % by weight with respect to the total weight of the aqueous dispersion, preferably between 37 % and 62 % by weight, more preferably between 42 % and 57 % by weight.

### Surfactant mixture

The aqueous dispersion comprises a surfactant mixture comprising a monoester sulfosuccinate salt, a diester sulfosuccinate salt and an ethoxylated and/or propoxylated non-ionic surfactant. The surfactant mixture may act as a stabilizer during and/or after the emulsion polymerization.

Each of the surfactants in the surfactant mixture may be present during emulsion polymerization and/or added after emulsion polymerization (i.e. after the polymer particles have been formed and the residual monomers have reacted). Preferably, at least one surfactant is present during emulsion polymerization, more preferably at least one surfactant is present during emulsion polymerization and at least one surfactant is added after emulsion polymerization. According to an embodiment, the at least one surfactant present during emulsion polymerization comprises a monoester sulfosuccinate salt, and the at least one surfactant added after emulsion polymerization comprises a diester sulfosuccinate salt, preferably the at least one surfactant present during emulsion polymerization comprises a monoester sulfosuccinate salt and an ethoxylated and/or propoxylated non-ionic surfactant, and the at least one surfactant added after emulsion polymerization comprises a diester sulfosuccinate salt.

The term "ethoxylated" can be defined as comprising at least one ethylene oxide unit, i.e. at least one -O-(CH₂CH₂O)ₙ- unit, wherein n is different from 0; thus, n represents the number of ethylene oxide units which is generally abbreviated "EO". If the compound comprises several -O-(CH₂CH₂O)ₙ- units, n may be identical or different in each unit, and "EO" corresponds to the total sum of ethylene oxide units in the compound. Ethoxylated compounds may be obtained by reacting a compound comprising at least one hydroxyl group with ethylene oxide. The mean EO number can be measured by high performance liquid chromatography (which can be coupled with mass spectrometry).

The term "propoxylated" can be defined as comprising at least one propylene oxide unit, i.e. at least one -O-(CH(CH₃)CH₂O)ₘ- and/or -O-(CH₂CH(CH₃)O)ₘ- unit, wherein m is different from 0, and may be identical or different in each unit if the compound comprises both -O-(CH(CH₃)CH₂O)ₘ- and -O-(CH₂CH(CH₃)O)ₘ- units; thus, m represents the number of propylene oxide units which is generally abbreviated "PO". If the compound comprises several -O-(CH(CH₃)CH₂O)ₘ- and/or -O-(CH₂CH(CH₃)O)ₘ- units, m may be identical or different in each unit, and "PO" corresponds to the total sum of propylene oxide units in the compound. Propoxylated compounds may be obtained by reacting a compound comprising at least one hydroxyl group with propylene oxide. The mean PO number can be measured by high performance liquid chromatography (which can be coupled with mass spectrometry).

### • Monoester sulfosuccinate salt

The monoester sulfosuccinate salt is a salt of a monoester of sulfosuccinic acid. The monoester sulfosuccinate salt may be a dialkali metal salt or a monoalkaline earth metal salt, preferably a dialkali metal salt, in particular a disodium salt.

The monoester sulfosuccinate dialkali metal salt may be represented by the formula: 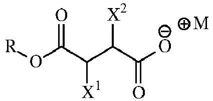 wherein:
- R represents a hydrocarbon group optionally comprising one or more heteroatoms such as oxygen; for example, R may comprise at least one ethylene oxide unit (i.e. the monoester sulfosuccinate salt is ethoxylated),
- M represents an alkali metal, in particular sodium, and
- one of X¹ and X² represents a hydrogen atom and the other one of X¹ and X² represents a sulfonate salt (-S(=O)₂-O- M⁺).

Advantageously, the monoester sulfosuccinate salt is a monoalkylester sulfosuccinate salt which is optionally ethoxylated, preferably the monoester sulfosuccinate salt is an ethoxylated monoalkylester sulfosuccinate salt; the alkyl group (in the monoester moiety) may comprise 4 to 20 carbon atoms, preferably 6 to 15 carbon atoms.

When the monoester sulfosuccinate salt is ethoxylated, its mean EO number may be comprised between 2 and 50, preferably between 2 and 25, more preferably between 3 and 10. The mean EO number can be measured by high performance liquid chromatography (which can be coupled with mass spectrometry).

The monoester sulfosuccinate salt may be present during emulsion polymerization and/or added after emulsion polymerization, preferably present during emulsion polymerization.

The total content of the monoester sulfosuccinate salt in the aqueous dispersion may be comprised between 0.1 % and 5 % by weight with respect to the total weight of the monomeric mixture, preferably between 0.2 % and 4 % by weight, more preferably between 0.3 % and 3 % by weight.

It is understood that, when the monoester sulfosuccinate salt is provided under the form of a solution in water, only the monoester sulfosuccinate salt content is taken into account for calculating its weight percentage with respect to the total weight of the monomeric mixture (and not the water).

### • Diester sulfosuccinate salt

The diester sulfosuccinate salt is a salt of a diester of sulfosuccinic acid. The diester sulfosuccinate salt may be a monoalkali metal, in particular a monosodium salt.

The diester sulfosuccinate monoalkali metal salt may be represented by the formula: 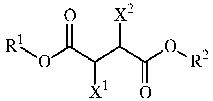 wherein:
- R¹ and R² independently represent a hydrocarbon group optionally comprising one or more heteroatoms such as oxygen; for example, R¹ and/or R² may comprise at least one ethylene oxide unit (i.e. the diester sulfosuccinate salt is ethoxylated),
- one of X¹ and X² is a hydrogen atom and the other one of X¹ and X² is a sulfonate salt (-S(=O)₂-O⁻ M⁺), and
- M is an alkali metal, in particular sodium.

Advantageously, the diester sulfosuccinate salt is a dialkylester sulfosuccinate salt which is optionally ethoxylated, preferably the diester sulfosuccinate salt is a dialkylester sulfosuccinate salt which is not ethoxylated; the alkyl group (in each ester moiety) may independently comprise 2 to 20 carbon atoms, preferably 4 to 13 carbon atoms. For example, the diester sulfosuccinate salt may be a ditridecyl (such as di(n-tridecyl)) sulfosuccinate salt, a dinonyl (such as di(n-nonyl)) sulfosuccinate salt, a dioctyl (such as di(n-octyl), bis(2-ethylhexyl)) sulfosuccinate salt, a diheptyl (such as di(n-heptyl)) sulfosuccinate salt, a dihexyl (such as di(n-hexyl), di(1,3-dimethylbutyl)) sulfosuccinate salt, a dipentyl (such as di(n-pentyl)) sulfosuccinate salt and/or a dibutyl (such as di(n-butyl), di(isobutyl)) sulfosuccinate salt. Preferably, the diester sulfosuccinate salt comprises (or consists essentially of) a dioctyl and/or a dihexyl sulfosuccinate salt, in particular a bis(2-ethylhexyl) sulfosuccinate salt and/or a di(1,3-dimethylbutyl) sulfosuccinate salt.

By "consists essentially of a dioctyl and/or a dihexyl sulfosuccinate salt", it is intended that the diester sulfosuccinate salt comprises less than 10% by weight of diester sulfosuccinate salts other than a dioctyl and/or a dihexyl sulfosuccinate salt, relative to the total weight of the diester sulfosuccinate salt, preferably less than 5 % by weight, even more preferably less than 1 % by weight.

The diester sulfosuccinate salt may be present during emulsion polymerization and/or added after emulsion polymerization, preferably added after emulsion polymerization.

The total content of the diester sulfosuccinate salt in the aqueous dispersion may be comprised between 0.5 % and 5 % by weight with respect to the total weight of the monomeric mixture, preferably between 0.6 % and 4 % by weight, more preferably between 0.7 % and 3 % by weight.

It is understood that, when the diester sulfosuccinate salt is provided under the form of a solution in water, only the diester sulfosuccinate salt content is taken into account for calculating its weight percentage with respect to the total weight of the monomeric mixture (and not the water).

### • Ethoxylated and/or propoxylated non-ionic surfactant

The ethoxylated and/or propoxylated non-ionic surfactant may be selected from ethoxylated and/or propoxylated alcohols, ethoxylated and/or propoxylated fatty acids, ethoxy-propoxy copolymers (EO-PO copolymers), and mixtures thereof.

The ethoxylated and/or propoxylated alcohols may be selected from ethoxylated and/or propoxylated carbohydrates (such as sorbitan, glucose), ethoxylated and/or propoxylated C6-C24 (in particular C8-C20) monoalcohols, and mixtures thereof, preferably ethoxylated and/or propoxylated C6-C24 monoalcohols, more preferably ethoxylated and/or propoxylated C6-C24 alkyl monoalcohols, in particular ethoxylated and/or propoxylated C8-C20 alkyl monoalcohols.

By "ethoxylated and/or propoxylated C6-C24 monoalcohol", it is intended a monoalcohol comprising 6 to 24 carbon atoms and further comprising ethylene oxide and/or propylene oxide units (i.e. the EO and/or PO units are not taken into account for determining the number of carbon atoms).

The ethoxylated and/or propoxylated fatty acids may be selected from ethoxylated and/or propoxylated C8-C20 fatty acids, preferably ethoxylated and/or propoxylated C12-C18 fatty acids (for example, oleic acid, stearic acid, linoleic acid).

By "ethoxylated and/or propoxylated C8-C20 fatty acid", it is intended a fatty acid comprising 8 to 20 carbon atoms and further comprising ethylene oxide and/or propylene oxide units (i.e. the EO and/or PO units are not taken into account for determining the number of carbon atoms).

The ethoxy-propoxy copolymers may be poloxamers (i.e. triblock copolymers composed of a central chain of polypropylene oxide) flanked by two chains of polyethylene oxide)).

Preferably, the ethoxylated and/or propoxylated non-ionic surfactant is selected from ethoxylated and/or propoxylated alcohols, in particular ethoxylated and/or propoxylated C8-C20 alkyl monoalcohols. More preferably, the ethoxylated and/or propoxylated non-ionic surfactant is selected from ethoxylated alcohols, in particular ethoxylated C8-C20 alkyl monoalcohols.

The total mean EO and PO number of the ethoxylated and/or propoxylated non-ionic surfactant may be comprised between 5 and 100, preferably between 20 and 85, more preferably between 25 and 70, for example between 30 and 50. Preferably, the non-ionic surfactant is ethoxylated and its mean EO number is comprised between 5 and 100, preferably between 20 and 85, more preferably between 25 and 70, for example between 30 and 50. The mean EO (and/or PO) number can be measured by high performance liquid chromatography (which can be coupled with mass spectrometry).

The ethoxylated and/or propoxylated non-ionic surfactant may be present during emulsion polymerization and/or added after emulsion polymerization.

The total content of the ethoxylated and/or propoxylated non-ionic surfactant in the aqueous dispersion may be comprised between 0.01 % and 5 % by weight with respect to the total weight of the monomeric mixture, preferably between 0.03 % and 3.5 % by weight, more preferably between 0.05 % and 2 % by weight.

It is understood that, when the ethoxylated and/or propoxylated non-ionic surfactant is provided under the form of a solution in water, only the ethoxylated and/or propoxylated non-ionic surfactant content is taken into account for calculating its weight percentage with respect to the total weight of the monomeric mixture (and not the water).

### • Additional surfactants

The surfactant mixture may further comprise one or more additional surfactants (different from the monoester sulfosuccinate salt, the diester sulfosuccinate salt and the ethoxylated and/or propoxylated non-ionic surfactant of the aqueous dispersion).

For example, the surfactant mixture may further comprise an alkyl sulfate, an alkyl ether sulfate, an alkyl sulfonate, an alkyl benzenesulfonate, an optionally substituted diphenyl oxide disulfonate, a phosphonate mono- or diester and/or a phosphate mono- or diester. A list of suitable surfactants is available in the book "Surfactants and Polymers in Aqueous solutions" (Holmberg et al., 2002, John Wiley & Sons).

Examples of suitable alkyl sulfates and alkyl ether sulfates are optionally ethoxylated C6-C22 fatty alcohol sulfates, such as decyl sulfate, lauryl sulfate, stearyl sulfate, C12-C14 fatty alcohol ether sulfate with 2 to 50 EO units.

Examples of suitable alkyl sulfonates are C6-C22 fatty alcohol sulfonates such as decyl sulfonate, lauryl sulfonate and stearyl sulfonate.

Examples of suitable alkyl benzenesulfonates are benzene sulfonates substituted with a linear or branched C6-C22 alkyl group such as sodium dodecylbenzene sulfonate.

An example of a suitable diphenyl oxide disulfonate is sodium dodecyl diphenyl oxide disulfonate.

Examples of suitable phosphate mono- or diesters are optionally alkoxylated alkyl phosphate monoester-diacids or salts, optionally alkoxylated alkyl diphosphate diester-monoacids or salts.

When the surfactant mixture comprises one or more additional surfactants, the total content of the additional surfactant(s) may be comprised between 0.01 % and 5 % by weight with respect to the total weight of the monomeric mixture.

It is understood that, when the additional surfactant is provided under the form of a solution in water, only the additional surfactant content is taken into account for calculating its weight percentage with respect to the total weight of the monomeric mixture (and not the water).

### • Other features of the surfactant mixture

The aqueous dispersion may comprise between 0.6 % and 15 % by weight of the surfactant mixture with respect to the total weight of the monomeric mixture, preferably between 0.8 % and 10 % by weight, more preferably between 1.0 % and 5 % by weight.

It is understood that, when the surfactant mixture is provided under the form of a solution in water, only the surfactant mixture content is taken into account for calculating its weight percentage with respect to the total weight of the monomeric mixture (and not the water).

According to an embodiment, the surfactant mixture consists essentially of a monoester sulfosuccinate salt, a diester sulfosuccinate salt and an ethoxylated and/or propoxylated non-ionic surfactant. The monoester sulfosuccinate salt, diester sulfosuccinate salt and ethoxylated and/or propoxylated non-ionic surfactant are as described above, including the embodiments and preferred features.

By "consists essentially of", it is intended that the surfactant mixture comprises less than 5 % by weight of surfactants other than the aforementioned surfactants, relative to the total weight of the surfactant mixture, preferably less than 2% by weight, even more preferably less than 1% by weight.

### Initiator

Advantageously, the polymer particles of the aqueous dispersion are obtained by emulsion polymerization of the monomeric mixture in the presence of an initiator.

The initiator may be a water-soluble free radical initiator. Suitable initiators are well known in the art and may be selected from, in particular, peroxides (i.e. compounds comprising an oxygen-oxygen single bond), azo-initiators, and mixtures thereof.

As examples of peroxides, mention may be made of inorganic persulfate compounds (such as ammonium persulfate, potassium persulfate, sodium persulfate), hydrogen peroxide, organic hydroperoxides (such as cumene hydroperoxide, t-butyl hydroperoxide, acetyl peroxide, benzoyl peroxide, lauroyl peroxide), peracids (such as peracetic acid, perbenzoic acid), and mixtures thereof.

As examples of azo-initiators, mention may be made of 2,2'-azobisisobutyronitrile, 4,4'-azobis(4-cyanovaleric acid) , 2,2'-azobis(2-methylbutyronitrile), and mixtures thereof.

Preferably, the initiator is a peroxide, in particular selected from ammonium persulfate, potassium persulfate, sodium persulfate, hydrogen peroxide, cumene hydroperoxide, t-butyl hydroperoxide, and mixtures thereof, more particularly selected from sodium persulfate, t-butyl hydroperoxide, and mixture thereof.

When a peroxide is implemented as an initiator, the aqueous dispersion may further comprise a reducing agent (used to promote the decomposition of the peroxide). Suitable reducing agents may be selected from alkali metal salts of sulfurous acid (such as sodium sulfite, sodium bisulfite), alkali metal salts of disulfurous acid (such as sodium metabisulfite), bisulfite addition compounds of aliphatic aldehydes and ketones (such as acetone bisulfite), hydroxymethanesulfinic acid and its salts, sulfinic acid salts (such as disodium hydroxysulfinoacetate), ferrous compounds (such as iron(II) sulfate, iron(III) chloride), thiosulfate salts (such sodium thiosulfate), tartaric acid or a salt thereof, ascorbic acid or a salt thereof, and mixtures thereof, in particular from alkali metal salts of sulfurous acid, alkali metal salts of disulfurous acid, sulfinic acid salts, ferrous compounds, and mixtures thereof.

The initiator content may be comprised between 0.01 % and 3.0 % by weight with respect to the total weight of the monomeric mixture, preferably between 0.1 % and 2.0 % by weight.

When a reducing agent is present, the weight ratio reducing agent / peroxide may be comprised between 0.01 and 5.

### Additional ingredients

The polymer particles of the aqueous dispersion may be obtained by emulsion polymerization of the monomeric mixture in the presence of one or more additional ingredients selected from chain transfer agents, buffers, and mixtures thereof, in particular selected from buffers.

The total amount of these additional ingredients may be up to 5 % by weight with respect to the total weight of the monomeric mixture, preferably up to 2 % by weight.

### • Chain transfer agent

The polymer particles of the aqueous dispersion may be obtained by emulsion polymerization of the monomeric mixture in the presence of a chain-transfer agent.

The chain transfer agent may be a compound able to react with a growing polymer chain to form a "dead" polymer with the concurrent formation of a new center for polymer growth. Chain transfer agents are also referred to as molecular weight modifiers as they are used to control the molecular weight of the polymer chain.

Suitable chain transfer agents are well known in the art and may be selected from, for example, thiols (such as n-dodecyl mercaptan, tert-dodecyl mercaptan, iso-octyl 3-mercaptopropionate, iso-octyl mercaptoacetate, 2-ethylhexyl thioglycolate), halocarbons (such as carbon tetrachloride, carbon tetrabromide), and mixtures thereof, in particular from thiols and mixtures thereof, more particularly from n-dodecyl mercaptan, tert-dodecyl mercaptan, and mixture thereof.

The chain transfer agent content may be up to 0.5 % by weight with respect to the total weight of the monomeric mixture, preferably up to 0.2 % by weight, more preferably up to 0.1 % by weight.

When a chain transfer agent is implemented, its content may be comprised between 0.005 % and 0.5 % by weight with respect to the total weight of the monomeric mixture, preferably between 0.010 % and 0.2 % by weight, more preferably between 0.020 % and 0.1 % by weight.

### • Buffer

The polymer particles of the aqueous dispersion may be obtained by emulsion polymerization of the monomeric mixture in the presence of a buffer.

The buffer may be a compound that controls and maintains the pH during polymerization in a controlled range, for example from 2 to 10, in particular 3 to 9. In particular, the buffer may be selected from ammonia, sodium bicarbonate, sodium carbonate, sodium acetate, 2-amino-2-methyl-1-propanol and sodium hydroxide, more particularly ammonia.

The buffer content may be up to 0.5 % by weight with respect to the total weight of the monomeric mixture.

### Other features of the aqueous dispersion

According to an embodiment, the aqueous dispersion according to the invention comprises polymer particles obtained by emulsion polymerization of a monomeric mixture comprising (or consisting essentially of):
- a) between 50 wt% and 90 wt% of a C4-C8 alkyl acrylate,
- b) between 2 wt% and 15 wt% of a vinyl aromatic monomer selected from styrene, o-methylstyrene, m-methylstyrene, p-methylstyrene, α-methylstyrene, o-ethylstyrene, m-ethylstyrene, p-ethylstyrene, p-tert-butylstyrene, o-methyl-p-isopropylstyrene, p-chlorostyrene, p-bromostyrene, o,p-dichlorostyrene, o,p-dibromostyrene, o-methoxystyrene, m-methoxystyrene, p-methoxystyrene, optionally substituted vinylnaphthalenes, 2-vinyl anthracene, and mixtures thereof,
- c) between 2 wt% and 20 wt% of a C1-C2 alkyl (meth)acrylate,
- d) between 1 wt% and 15 wt% of a hydroxy C2-C8 alkyl (meth)acrylate,
- e) between 1 wt% and 5 wt% of an ethylenically unsaturated polycarboxylic acid and/or a salt thereof, and
- f) optionally up to 30 wt% of an ethylenically unsaturated monomer different from a), b), c), d) and e) as defined above,
wherein the aqueous dispersion further comprises a surfactant mixture comprising (or consisting essentially of):
- between 0.1 % and 5 % by weight of a monoester sulfosuccinate salt, preferably a monoalkylester sulfosuccinate salt which is optionally ethoxylated,
- between 0.5 % and 5 % by weight of a diester sulfosuccinate salt, preferably a dialkylester sulfosuccinate salt which is optionally ethoxylated, and
- between 0.01 % and 5 % by weight of an ethoxylated and/or propoxylated non-ionic surfactant, the ethoxylated and/or propoxylated non-ionic surfactant being preferably selected from ethoxylated and/or propoxylated alcohols,
wherein the emulsion polymerization of the monomeric mixture is carried out in the presence of:
- between 0.01 % and 3.0 % by weight of an initiator,
- optionally a reducing agent when a peroxide is implemented as an initiator, the weight ratio reducing agent / peroxide being comprised between 0.01 and 5, and
- optionally up to 5 % by weight of one or more additional ingredients selected from chain transfer agents, buffers, and mixtures thereof,
the weight percentages being with respect to the total weight of the monomeric mixture.

Preferably, the aqueous dispersion consists essentially of the ingredients mentioned above and water. By "consists essentially of", it is intended that the aqueous dispersion comprises less than 2 % by weight of ingredients other than the aforementioned ingredients and water, relative to the total weight of the aqueous dispersion, preferably less than 1% by weight, even more preferably less than 0.5% by weight.

The ingredients of this embodiment and their particular contents are as described above, including the embodiments and preferred features.

In particular, the aqueous dispersion according to the invention comprises polymer particles obtained by emulsion polymerization of a monomeric mixture comprising (or consisting essentially of):
- a) between 75 wt% and 85 wt% of a C4-C8 alkyl acrylate, the C4-C8 alkyl acrylate being preferably selected from n-butyl acrylate, 2-ethylhexyl acrylate, and mixtures thereof,
- b) between 3.5 wt% and 8 wt% of a vinyl aromatic monomer preferably selected from styrene, o-methylstyrene, m-methylstyrene, p-methylstyrene, and mixtures thereof,
- c) between 8 wt% and 13 wt% of a C1-C2 alkyl (meth)acrylate, the C1-C2 alkyl (meth)acrylate being preferably selected from methyl methacrylate, ethyl methacrylate, and mixture thereof,
- d) between 1.5 wt% and 8 wt% of a hydroxy C2-C8 alkyl (meth)acrylate, the hydroxy C2-C8 alkyl (meth)acrylate being preferably selected from 2-hydroxyethyl methacrylate, 3-hydroxypropyl methacrylate, 4-hydroxybutyl methacrylate, and mixtures thereof,
- e) between 1.1 wt% and 2.5 wt% of an ethylenically unsaturated polycarboxylic acid and/or a salt thereof, said polycarboxylic acid being preferably selected from maleic acid, fumaric acid, itaconic acid, and mixtures thereof, and
- f) optionally up to 10 wt% of an ethylenically unsaturated monomer different from a), b), c), d) and e) as defined above, said monomer f) being preferably selected from ethylenically unsaturated alkoxysilanes, carbonyl-substituted (meth)acryloyl monomers, and mixtures thereof,

wherein the aqueous dispersion further comprises a surfactant mixture comprising (or consisting essentially of):
   - between 0.3 % and 3 % by weight of a monoester sulfosuccinate salt, preferably an ethoxylated monoalkylester sulfosuccinate salt,
   - between 0.7 % and 3 % by weight of a diester sulfosuccinate salt, preferably a non-ethoxylated dialkylester sulfosuccinate salt, and
   - between 0.05 % and 2 % by weight of an ethoxylated and/or propoxylated non-ionic surfactant, the ethoxylated and/or propoxylated non-ionic surfactant being preferably selected from ethoxylated and/or propoxylated C8-C20 alkyl monoalcohols,
wherein at least one surfactant of the surfactant mixture is present during emulsion polymerization and at least one surfactant of the surfactant mixture is added after emulsion polymerization, and
wherein the emulsion polymerization of the monomeric mixture is carried out in the presence of:
   - between 0.1 % and 2.0 % by weight of an initiator, preferably a peroxide,
   - optionally a reducing agent when a peroxide is implemented as an initiator, the weight ratio reducing agent / peroxide being comprised between 0.01 and 5, and
   - optionally up to 2 % by weight of one or more additional ingredients selected from chain transfer agents, buffers, and mixtures thereof,
the weight percentages being with respect to the total weight of the monomeric mixture.

Preferably, the aqueous dispersion consists essentially of the ingredients mentioned above and water.

The ingredients of this embodiment and their particular contents are as described above, including the embodiments and preferred features.

### Process for preparing the aqueous dispersion

The invention also relates to a process for preparing the aqueous dispersion according to the invention comprising emulsion polymerization of a monomeric mixture to obtain polymer particles.

In the process for preparing the aqueous dispersion according to the invention, the aqueous dispersion is as described above, including the embodiments and preferred features.

The emulsion polymerization may be carried out at a temperature from 30°C to 120°C, preferably from 50°C to 100°C.

The aqueous dispersion of the invention may be prepared using any known emulsion polymerization procedure which produces polymer dispersions in aqueous latex form. Such procedures are described in, for example, Encyclopedia of Polymer Science and Engineering, Vol. 8, p. 659 ff (1987).

Advantageously, the process for preparing the aqueous dispersion according to the invention comprises emulsion polymerization of a monomeric mixture to obtain polymer particles, said polymerization comprising:
- emulsifying the monomeric mixture in water with at least one surfactant of a surfactant mixture to provide a monomeric pre-emulsion, then
- contacting the monomeric pre-emulsion with an initiator,

wherein the monomeric mixture and the surfactant mixture are as described above for the aqueous dispersion according to the invention, and
wherein each of the surfactants of the surfactant mixture is implemented during the emulsion polymerization and/or after the emulsion polymerization.

In the process for preparing the aqueous dispersion according to the invention, the aqueous dispersion is as described above (including the monomeric mixture, initiator and surfactant mixture), including the embodiments and preferred features.

The initiator may be dissolved in water before being contacted with the monomeric pre-emulsion.

The contacting step with an initiator may be continuous or discontinuous, preferably discontinuous. Preferably, part of the monomeric pre-emulsion is first introduced into a reactor to form seed particles, then an initiator is added and the remainder of the pre-emulsion is introduced in one or more successive steps. The monomers in the seed part of the pre-emulsion may represent from 0.05 % to 10 % by weight of the total weight of the monomeric mixture.

Advantageously, the process for preparing the aqueous dispersion according to the invention further comprises a step of adding a second initiator after the monomeric pre-emulsion has been contacted with an initiator. This last step is generally implemented to react the residual monomers (unreacted monomers of the monomeric mixture).

The second initiator may be the same or different from the initiator implemented before, and each of said initiators may be only one initiator or a mixture of initiators.

According to a preferred embodiment, the process for preparing the aqueous dispersion according to the invention comprises emulsion polymerization of a monomeric mixture to obtain polymer particles, said polymerization comprising:
- emulsifying the monomeric mixture in water with at least one surfactant of a surfactant mixture to provide a monomeric pre-emulsion, then
- contacting a part of the monomeric pre-emulsion with a first initiator to provide a seed part, then
- contacting the seed part with the remainder of the monomeric pre-emulsion and a second initiator,

wherein the monomeric mixture and the surfactant mixture are as described above for the aqueous dispersion according to the invention, and
wherein each of the surfactants of the surfactant mixture is implemented during the emulsion polymerization and/or after the emulsion polymerization.

The first and second initiators may be the same or different, and each of the first and second initiator may be only one initiator or a mixture of initiators.

The monomers in the seed part of the pre-emulsion may represent from 0.05 % to 10 % by weight of the total weight of the monomeric mixture.

Advantageously, the diester sulfosuccinate salt of the surfactant mixture is implemented after emulsion polymerization. It is generally considered that emulsion polymerization process is finished after a treatment to react residual monomers (unreacted monomers of the monomeric mixture).

Advantageously, the process for preparing the aqueous dispersion according to the invention further comprises a step of adding a third initiator after the remainder of the monomeric pre-emulsion has been contacted with the seed part. This last step is generally implemented to react the residual monomers (unreacted monomers of the monomeric mixture).

The third initiator may be the same or different from the first and second initiators, and may be only one initiator or a mixture of initiators.

In particular, the process for preparing the aqueous dispersion according to the invention comprises emulsion polymerization of a monomeric mixture to obtain polymer particles, said polymerization comprising:
- i) emulsifying the monomeric mixture in water with a monoester sulfosuccinate salt to provide a monomeric pre-emulsion, then
- ii) contacting a part of the monomeric pre-emulsion with a first initiator to provide a seed part, then
- iii) contacting the seed part with the remainder of the monomeric pre-emulsion and a second initiator, then
- iv) adding a third initiator to the mixture obtained in step iii),

wherein a diester sulfosuccinate salt is implemented after emulsion polymerization, and
wherein an ethoxylated and/or propoxylated non-ionic surfactant is implemented during the emulsion polymerization and/or after the emulsion polymerization.

When a peroxide is implemented as an initiator in the process for preparing the aqueous dispersion according to the invention, a reducing agent may further be added together with the peroxide. The reducing agent is as described above, including the embodiments and preferred features.

According to an alternative embodiment, the process for preparing the aqueous dispersion according to the invention comprises emulsion polymerization of a monomeric mixture to obtain polymer particles, said polymerization comprising:
- contacting polymer particles, preferably polystyrene particles, with a first initiator to provide seed polymer particles,
- emulsifying the monomeric mixture in water with at least one surfactant of a surfactant mixture to provide a monomeric pre-emulsion, then
- contacting the monomeric pre-emulsion with the seed polymer particles and a second initiator,

wherein the monomeric mixture and the surfactant mixture are as described above for the aqueous dispersion according to the invention, and
wherein each of the surfactants of the surfactant mixture is implemented during the emulsion polymerization and/or after the emulsion polymerization.

The first and second initiators may be the same or different, and each of the first and second initiator may be only one initiator or a mixture of initiators.

The amount of seed polymer particles may be comprised between 0.05 % and 10 % by weight with respect to the total weight of the monomeric mixture.

Advantageously, the diester sulfosuccinate salt of the surfactant mixture is implemented after emulsion polymerization.

Advantageously, the process for preparing the aqueous dispersion according to the invention further comprises a step of adding a third initiator after the monomeric pre-emulsion has been contacted with the seed polymer particles and the second initiator. This last step is generally implemented to react the residual monomers (unreacted monomers of the monomeric mixture).

The third initiator may be the same or different from the first and second initiators, and may be only one initiator or a mixture of initiators.

In particular, the process for preparing the aqueous dispersion according to the invention comprises emulsion polymerization of a monomeric mixture to obtain polymer particles, said polymerization comprising:
- contacting polymer particles, preferably polystyrene particles, with a first initiator to provide seed polymer particles,
- emulsifying the monomeric mixture in water with a monoester sulfosuccinate salt to provide a monomeric pre-emulsion, then
- contacting the monomeric pre-emulsion with the seed polymer particles and a second initiator, then
- adding a third initiator,
wherein a diester sulfosuccinate salt is implemented after emulsion polymerization, and wherein an ethoxylated and/or propoxylated non-ionic surfactant is implemented during the emulsion polymerization and/or after the emulsion polymerization.

When a peroxide is implemented as an initiator in the process for preparing the aqueous dispersion according to the invention, a reducing agent may further be added together with the peroxide. The reducing agent is as described above, including the embodiments and preferred features.

As indicated above for the aqueous dispersion, one or more additional ingredients may be implemented during emulsion polymerization, which may be selected from chain transfer agents, buffers, and mixtures thereof, in particular selected from buffers.

### Adhesive composition

The invention also relates to an adhesive composition comprising the aqueous dispersion according to the invention.

In the adhesive composition according to the invention, the aqueous dispersion is as described above, including the embodiments and preferred features.

The aqueous dispersion content may be comprised between 60 % and 100 % by dry weight with respect to the total dry weight of the adhesive composition.

By "dry weight of X", it is intended the weight of X without taking into account the weight of a possible solvent that may be comprised in X. Solvents are well known by the skilled person and include, for example, water, ethanol, isopropanol, ethyl acetate, butyl acetate, acetone, butanone, methyl isobutyl ketone, tetrahydrofuran, cyclohexane, benzene, toluene, xylene, etc. The dry weight may be defined as the solid weight, which can be determined as the solids content according to ISO 3251, for example as described in Example 1 below.

The adhesive composition according to the invention may further comprise a tackifying resin.

Tackifying resins are known, for example, from Adhesive Age, July 1987, pages 19-23 or Polym. Mater. Sci. Eng. 61 (1989), pages 588-592.

The tackifying resin may be selected from:
- natural and modified rosin, such as gum rosin, wood rosin, tall-oil rosin, distilled rosin, hydrogenated rosin, dimerized rosin, polymerized rosin,
- esters of natural and modified rosins, in particular glycerol and/or pentaerythritol esters such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

By "about X", it is intended more or less 10% the value of X.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

The tackifying resin content may be up to 40 % by dry weight with respect to the total dry weight of the adhesive composition.

The adhesive composition according to the invention may further comprise one or more additives selected from thickeners, defoamers, fillers, pigments, plasticizers, and mixtures thereof.

The total additive content may be up to 10 % by dry weight with respect to the total dry weight of the adhesive composition.

The thickener is preferably selected from associative thickeners. Examples of thickeners are hydrophobically modified alkali soluble emulsion (HASE) (such as Thixol 53L, Reotech 2000, Reotech 4800) and/or hydrophobically modified ethoxylated urethane resins in water (HEUR) (such as Coapur 830, Coapur 6050, Coapur 975W).

For example, the defoamer may be selected from modified silica particles in mineral oil (such as Kemfoamex 6615 (KEMIRA), Agitan 305 (Munzig)), emulsions of a polyether siloxane copolymer containing fumed silica (such as Airex 902W (Evonik)), organo modified polysiloxanes (such as Tego 2315 D (Evonik)), emulsions of mineral oils, and mixtures thereof.

For example, the filler may be selected from mineral fillers, organic fillers, and mixtures thereof, for example from metal oxides (such as alumina, zinc oxide), metal hydroxides (such as aluminium trihydroxide, magnesium hydroxide), mineral hollow microspheres (such as sodium and calcium borosilicate or aluminosilicate hollow microspheres), clays, quartz, carbonated fillers (in particular calcium carbonate which may be coated with fatty acids such as stearic acid), kaolin, gypsum, zeolites, and mixtures thereof.

For example, the pigment may be selected from organic pigments, inorganic pigments, and mixtures thereof, for example from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments, thioindigo-based pigments, quinophthalone-based pigments, titanium dioxide, carbon black, manganese ferrite, and mixtures thereof
For example, the plasticizer may be selected from alkylphthalates (such as diisodecyl phthalate, diisononyl phthalate, diisononyl hexahydrophthalate), diester adipates (such as diisononyl adipate, di-2-ethylhexyl adipate, di-(2-butoxyethyl)adipate), esters of alkylsulphonic acid and phenol (e.g. MESAMOLL^{®} by LANXESS), pentaerythritol tetravalerate, diisononyl-1,2-cyclohexane dicarboxylate, 3,3'-methylenebis(oxymethylene)]bis[heptane], dioctyl carbonate, and mixtures thereof.

According to an embodiment, the adhesive composition according to the invention comprises:
- between 60 % and 100 % by dry weight of the aqueous dispersion according to the invention,
- optionally up to 40 % by dry weight of a tackifying resin, and
- optionally up to 10 % by dry weight of one or more additives selected from thickeners, defoamers, fillers, pigments, plasticizers, and mixtures thereof,
the percentages being with respect to the total dry weight of the adhesive composition.

Preferably, the adhesive composition consists essentially of the ingredients mentioned above. By "consists essentially of", it is intended that the adhesive composition comprises less than 5 % by weight of ingredients other than the aforementioned ingredients, relative to the total weight of the adhesive composition, preferably less than 2% by weight, even more preferably less than 1% by weight.

The ingredients of this embodiment and their particular contents are as described above, including the embodiments and preferred features.

In particular, the adhesive composition according to the invention consists essentially of the aqueous dispersion according to the invention.

The adhesive composition according to the invention can be prepared by simple mixing of its ingredients.

Advantageously, the adhesive composition according to the invention has a 180º peel strength on high density polyethylene greater than or equal to 2.0 N/25.4mm, preferably between 2.0 N/25.4mm and 10 N/25.4mm. This 180° peel strength may be measured as described in FINAT FTM1 method (2014 revision), for example as described in Example 1.

### Uses of the adhesive composition

The invention also relates to the use of the adhesive composition according to the invention as a pressure-sensitive adhesive (PSA), in particular for bonding two substrates together.

A PSA may be defined as a viscoelastic adhesive having a permanently tacky surface in the dry state at room temperature. Adhesion to a substrate can be accomplished immediately by gentle applied pressure and does not require an activation step (for example heating or wetting with water).

The substrates to be bonded may be different or of same nature, with various forms.

Each substrate may be selected independently from glass (which may have been coated, for example with a metallic oxide such as tin oxide, optionally further coated with a wax layer such as polyethylene wax), metals, non-woven fabrics, woven fabrics, absorbent fluff, super absorbent polymers (SAP), composite materials, plastics, cardboard, paper, and mixtures thereof, preferably from glass, cardboard, paper, plastics, and mixtures thereof, in particular from glass, paper, plastics, and mixtures thereof.

As examples of non-woven fabrics, mention may be made of polyolefin (in particular polyethylene and/or polypropylene) non-woven fabrics, cotton non-woven fabrics, polyester (in particular polyethylene terephthalate and/or polybutylene terephthalate) non-woven fabrics and/or polyamide (in particular polyamide 6 and/or polyamide 66) non-woven fabrics.

Plastics (such as films, bottles, etc.) are based on polymers, and may comprise one or more additives such as plasticizers. As examples of polymers, mention may be made of polyolefins (such as polyethylene, polypropylene and/or polybutylenes), polystyrene, styrene block copolymers, natural or synthetic rubbers (such as polyisoprene, polybutadiene, polypentadiene, butadiene isoprene copolymer, isobutene isoprene copolymer, polychloroprene, nitrile butadiene rubber and/or styrene butadiene rubber), vinyl copolymers (such as polyvinyl chloride, which may or may not be plasticized, and/or poly(vinyl acetate)), olefinic copolymers (such as ethylene methacrylate copolymers, ethylene vinyl acetate copolymers, acrylonitrile butadiene styrene copolymers and/or ethylene propylene copolymers), acrylic polymers and copolymers, polyurethanes, polyethers and/or polyesters (such as polyethylene terephthalate), preferably polyolefins, vinyl copolymers and/or polyesters, in particular polyolefins.

According to an embodiment, at least one of the substrates to be bonded is paper. Preferably, the other substrate to be bonded is a plastic, preferably made of a polyolefin (e.g. polyethylene or polypropylene). For example, the substrates to be bonded are paper and a plastic made of polyethylene and/or polypropylene.

The invention further relates to the use of the adhesive composition according to the invention as a water-debondable pressure sensitive adhesive.

By "water-debondable pressure sensitive adhesive", it is intended a pressure sensitive adhesive which can be easily debonded from at least one substrate to which it is bonded, after immersion in a warm aqueous solution (e.g. between 30°C and 50°C), which may have a pH comprised between 6 and 14. Such adhesive is particularly useful for making self-adhesive products (such as tapes, labels) which need to be debonded from the substrate to which they are bonded. The aqueous solution is preferably water or a basic aqueous solution (for example aqueous solution of sodium hydroxide). Preferably, the immersion is carried out during at least 1 min, more preferably at least 2 min, for example between 2 min and 10 min.

Advantageously, said adhesive is intended for bonding two substrates together, the substrates being as described above, including the preferred features and embodiments. In particular, at least one of the substrates is paper.

Preferably, said adhesive can be at least 50% debonded, more preferably at least 60% debonded, from at least one substrate, in particular from a plastic (especially made of polyethylene and/or polypropylene), after immersion in a warm aqueous solution. The debonding percentage can be determined by following the method described in Example 1.

### Article

The invention further relates to an article comprising the adhesive composition according to the invention.

According to a preferred embodiment, said composition bonds at least two substrates of the article according to the invention. The at least two substrates may be joined adhesively by a layer of the adhesive composition according to the invention, in sandwich between the two substrates.

The substrates are preferably as described above for the use of the adhesive composition according to the invention, including the embodiments and preferred features.

According to an embodiment, the article is a labeled object, in particular a labeled package (e.g. box), bag or container (e.g. bottle), preferably a labeled container such as a labeled bottle. Preferably, at least one of the substrates is paper bonded to a plastic or glass, preferably a plastic; plastics and glass being preferably as described above for the method for bonding substrates according to the invention (including the embodiments and preferred features).

### Multilayer system and self-adhesive products

The invention also relates to a multilayer system comprising the adhesive composition according to the invention, said composition being a PSA.

In particular, the multilayer system according to the invention comprises:
- an adhesive layer consisting of the adhesive composition according to the invention, said composition being a PSA,
- a facestock layer adjacent to the adhesive layer, and
- a protective layer (or release liner) or coating adjacent to the adhesive layer.

The facestock layer is preferably made of paper or of a plastic layer, more preferably paper. The plastic layer is based on one or more polymers, and may comprise one or more additives such as plasticizers. As examples of suitable polymers for the plastic layer, mention may be made of polyolefins (such as polyethylene, polypropylene and/or polybutylenes), polystyrene, natural or synthetic rubbers (such as polyisoprene, polybutadiene, polypentadiene, butadiene isoprene copolymer, isobutene isoprene copolymer, polychloroprene, nitrile butadiene rubber and/or styrene butadiene rubber), vinyl copolymers (such as polyvinyl chloride, which may or may not be plasticized, and/or poly(vinyl acetate)), olefinic copolymers (such as ethylene methacrylate copolymers, ethylene vinyl acetate copolymers, acrylonitrile butadiene styrene copolymers and/or ethylene propylene copolymers), acrylic polymers and copolymers, polyurethanes, polyethers and/or polyesters (such as polyethylene terephthalate), preferably polyolefins, vinyl copolymers and/or polyesters, in particular polyolefins.

Other layers, in particular plastic layers, may be bonded to the facestock layer. In particular, a plastic film may be implemented, said film comprising the facestock layer (being a plastic layer) and at least one plastic layer being different from the facestock layer. For example, the facestock layer may be a plastic layer of polyolefin (such as polypropylene) and bonded to a plastic layer of polyester (such as polyethylene terephthalate).

The facestock layer is preferably a printable facestock layer.

The protective layer or coating can be easily removed without modifying the adhesive layer, which remains attached to the facestock layer, because the protective layer or coating is non-sticky.

Preferably, the protective layer or coating comprises a silicone-based material. The protective layer is not the facestock layer or a layer bonded to the facestock layer. The protective coating may be applied to the surface of the facestock layer which is not in contact with the adhesive layer (or a layer bonded to the facestock layer).

According to an embodiment, the multilayer system according to the invention is packaged in the form of a winding around a reel (or roll), the dimensions of which can vary within a wide range. Thus, the diameter of such a roll may range from 0.25 m to 1 m, and its width from 0.25 m to 2 m.

According to this preferred embodiment, the surface of the facestock layer which is opposite to the surface in contact with the adhesive layer, or the surface of a layer bonded to the facestock layer, is advantageously coated with a silicone-based material (which forms the protective coating). Such a multilayer system is sometimes denoted by the name "linerless". Said packaging is particularly advantageous, because of its simplicity and the resulting economy, for converters who convert these roll stocks into final self-adhesive products, such as labels or tapes.

For example, self-adhesive labels may be obtained by a conversion process of the multilayer system comprising:
- an optional step of printing onto the printable facestock layer of the multilayer system, then
- a step of die-cutting the multilayer system, except the protective layer, to the shape and dimensions of the self-adhesive labels designed for its final use, then
- a step of removing the undesirable part of the multilayer system which has been cut (step of "stripping"), i.e. the adhesive layer, the facestock layer and the layers bonded to the facestock layers when present. Therefore, after this latter step, self-adhesive labels can be easily removed from the protective layer.

The multilayer system according to the invention may be manufactured by applying the adhesive composition according to the invention (being a PSA) in a wet state at room temperature (e.g. between 18°C and 27°C) to the facestock layer or to the protective layer in an amount generally of between 1 g/m² and 70 g/m² so as to form the adhesive layer, preferably between 10 g/m² and 50 g/m². The application can be carried out by known coating techniques such as curtain coating, gravure coating, Mayer bar coating, rolling or knife (or doctor blade) coating. The adhesive composition can be applied onto the facestock layer (or on the protective layer). After the application, a drying step is generally used to remove the aqueous phase of the dispersion. The drying step may be carried out by heating, for example at a temperature of 50°C to 150°C, preferably 60°C to 100°C. Then, the assembly can be laminated to the protective layer (or the facestock layer).

The present invention also relates to self-adhesive products, such as labels and tapes (preferably labels), obtainable from the multilayer system according to the invention.

The self-adhesive products according to the invention may be obtained by conversion of the multilayer system according to the invention. In this case, a printable facestock layer is preferred. For example, self-adhesive labels may be obtained by a conversion process of the multilayer system as described above.

The converted multilayer system may be employed on lines for objects to be labeled, by means of automated systems which separate the self-adhesive labels from the protective layer, and attach them to the objects to be labeled. The labeled object is preferably as described above.

### Process for recycling

Finally, the invention relates to a process for recycling an article comprising the adhesive composition according to the invention, said composition bonding at least two substrates of the article. Said process comprises a step of immersing the article in a warm aqueous solution and a step of debonding the substrates bonded by the adhesive composition. The debonding step may be carried out while the article is in the warm aqueous solution and/or after its removal from the warm aqueous solution, preferably while the article is in the warm aqueous solution. The warm aqueous solution may have a pH comprised between 6 and 14.

The aqueous solution is preferably water or a basic aqueous solution (for example aqueous solution of sodium hydroxide).

Preferably, the immersion step is carried out during at least 1 min, more preferably at least 2 min, for example between 2 min and 10 min.

Advantageously, the article is as described above, including the preferred features and embodiments.

According to an embodiment, the article is a labeled object. When the process according to the invention is implemented, the label can be debonded from the object to which it was bonded and the object (devoid of its label) can be recycled, in particular reused. In particular, the object that can be recycled is in plastic or glass, preferably in plastic (especially made of polyethylene and/or polypropylene).

All the embodiments described above can be combined with each other. In particular, the various aforementioned ingredients in the aqueous dispersion, and in particular the preferred embodiments, can be combined with each other.

The following examples illustrate the invention without limiting it.

### EXAMPLES

### Example 1: Materials and methods

### Materials

The following materials were implemented:
- 2EHA: 2-ethylhexyl acrylate,
- ST: styrene,
- MMA: methyl methacrylate,
- ITA: itaconic acid,
- AA: acrylic acid,
- HEMA: 2-hydroxyethyl methacrylate,
- Polirol SE 301 (Lamberti): polyethylene glycol alkyl ether sulfosuccinate disodium salt, solid content of about 30 wt%,
- SURFALINE OX 1320L (Arkema): ethoxylated C11-C14 alcohols having 20 ethylene oxide units on average, solid content of about 80 wt%,
- Polirol AL 1065 (Lamberti): ethoxylated fatty alcohols, solid content of about 65 wt%,
- Aerosol^{®} WA-300 (Solvay): mixture comprising bis(2-ethylhexyl) sulfosuccinate sodium salt and di(1,3-dimethylbutyl) sulfosuccinate sodium salt, solid content of about 75 wt%,
- NaPS: sodium persulfate,
- NaBS: sodium bisulfite,
- NaMBS: sodium metabisulfite,
- H₂O₂: hydrogen peroxide,
- TBHP: tert-butyl hydroperoxide,
- Bruggolite^{®} FF6 M (by Brüggemann): sodium salt of an organic sulfinic acid derivative, reducing agent,
- FeSO₄: iron(II) sulfate heptahydrate,
- Ammonia: aqueous solution comprising 20 wt% of ammonia,
- Water: demineralized water.

### Solids content

The solids content of each polymer dispersion was determined by the method ISO 3251. It is expressed as a weight percentage with respect to the total weight of the dispersion, after drying 1h at 105°C in oven.

### pH

The pH of each polymer dispersion was determined by the method ISO 976 with a pH meter Radiometer Copenhagen.

### Viscosity

The polymer dispersion viscosities have been measured by the method ISO 2555 with a Brookfield viscometer RVT, at 23°C and 20 rpm, using the appropriate spindle, in order to stay in the allowed torque range for the instrument.

### Particle size

The particle size of each polymer dispersion was determined by using a dynamic light scattering instrument Malvern ZS90 (unimodal average analysis in intensity).

### Glass transition temperature (Tg)

The polymer dispersion to be tested was applied on a polytetrafluoroethylene (PTFE) plate, and dried for 7 days at 23°C and 50% Relative Humidity (RH). The Tg was determined by Differential Scanning Calorimetry (DSC) with a DSC 6 Perkin Elmer. The DSC was carried out with a temperature increase of -100°C to 100°C with a rate of 20°C/min. Two runs were carried out with a cooling rate of 40°C/min between the runs. The Tg corresponds to the temperature of the midpoint point of the DSC curve of the second run.

### Peel adhesion

The polymer dispersion to be tested was applied on a siliconized paper (liner) and dried at 80°C for a few minutes, in order to obtain a dry weight per unit area of about 14 g/m². Once dried, it was laminated with gloss paper of the type COATED 80 (LIPAC brand). Then, the assembly was cut in 2.5 cm wide strips which were stored for 24 hours at 23°C and 50% Relative Humidity (RH). The strips were then applied on a disposable high density polyethylene (HDPE, Cheminstruments).

The 180° peel adhesion was determined according to the FINAT FTM1 method (2014 revision) 20 min after the strip had been attached to the HDPE.

### Washing test

From strips made in the same way as to carry out peel adhesion test, 60 labels (10 mm x10 mm wide) were cut and applied on two polypropylene plates 5 cm x 20 cm (30 for each plate, plates from Cheminstruments). Then, the two plates were further conditioned for 7 days at 23°C and 50% RH. Then, the two plates were sunk into a 5 liters beaker of 18 cm diameter full of demineralized water warmed at constant temperature of 40°C, and stirred with an anchor 7 cm wide turning at 250 revolutions per minute (rpm). After 2 minutes, the number of labels detached was counted and the result was expressed as a percentage with respect to the total number of labels tested.

### Example 2: Preparation of comparative dispersion 1

An aqueous dispersion of polymer particles was prepared as follows.

1841 g of deionized water were added in a 10L glass reactor fitted with a condenser, a stirrer, a temperature control system and inlets for nitrogen and the feed solutions.

In another container fitted with a stirrer (pre-emulsifier), a monomer pre-emulsion was prepared with 985 g of deionized water, 188.6 g of Polirol SE 301 and 3911 g of a monomeric mixture comprising 82.5 wt% of 2EHA, 4.6 wt% of ST, 10.9 wt% of MMA and 2.0 wt% of AA based on the total weight of the monomeric mixture.

When the contents of the reactor have reached a temperature of 66°C, 290 g of the monomer pre-emulsion were added followed by 2.3 g of NaPS dissolved in 20 g of water, then 0.040 g of FeSO₄ and then 1.99 g of NaMBS.

About two minutes after having reached the exothermic peak, 36.3 g of SURFALINE OX 1320L dissolved in 160 g of water were added on the remaining portion of the monomer pre-emulsion. Then, this remaining portion of the monomer pre-emulsion, 170 g of a 5 wt% NaPS aqueous solution and 1.15 g of NaBS dissolved in 90 g of water were fed into the reactor at a constant feed rate, over a period of 4.5 hours, taking care to keep the contents of the reactor at a temperature of 68-72°C throughout the feed.

After that, the contents were heated to 78-82°C over a period of 30', and 26 g of ammonia solution were added into the reactor. Keeping the reactor contents at the same temperature, 208 g of a 5 wt% NaPS aqueous solution and 30 g of H₂O₂ diluted with 178 g of water were separately fed into the reactor at a constant feed rate over a period of 240 minutes.

The reactor contents were then cooled to 56-60°C, and were fed separately at constant rate at the same time: 45 g of 13 wt% TBHP aqueous solution over a period of 60 min and 145 g of a 12 wt% Bruggolite^{®} FF6 M aqueous solution over a period of 90 min, the contents of the reactor being maintained at 56-60°C.

30 minutes after the end of the above addition, polymerization is over. The resulting mixture was cooled to 35°C, the pH was corrected between 5.0 and 6.0, and 103 g of Aerosol^{®} WA-300 were added into the reactor. After that, the mixture was filtered through a 36 mesh screen and the filtrate was collected. The solids content of the dispersion was set to about 50-53 wt%.

### Example 3: Preparation of comparative dispersion 2

An aqueous dispersion of polymer particles was prepared as follows.

1841 g of deionized water were added in a 10L glass reactor fitted with a condenser, a stirrer, a temperature control system and inlets for nitrogen and the feed solutions.

In another container fitted with a stirrer (pre-emulsifier), a monomer pre-emulsion was prepared with 985 g of deionized water, 188.6 g of Polirol SE 301 and 3911 g of a monomeric mixture comprising 82.7 wt% of 2EHA, 4.6 wt% of ST, 10.9 wt% of MMA and 1.8 wt% of ITA based on the total weight of the monomeric mixture.

When the contents of the reactor have reached a temperature of 66°C, 290 g of the monomer pre-emulsion were added followed by 2.3 g of NaPS dissolved in 20 g of water, then 0.040 g of FeSO₄ and then 1.99 g of NaMBS.

About two minutes after having reached the exothermic peak, 36.3 g of SURFALINE OX 1320L dissolved in 160 g of water were added on the remaining portion of the monomer pre-emulsion. Then, this remaining portion of the monomer pre-emulsion, 170 g of a 5 wt% NaPS aqueous solution and 1.15 g of NaBS dissolved in 90 g of water were fed into the reactor at a constant feed rate, over a period of 4.5 hours, taking care to keep the contents of the reactor at a temperature of 68-72°C throughout the feed.

After that, the contents were heated to 78-82°C over a period of 30', and 26 g of ammonia solution were added into the reactor. Keeping the reactor contents at the same temperature, 208 g of a 5 wt% NaPS aqueous solution and 30 g of H₂O₂ diluted with 178 g of water were separately fed into the reactor at a constant feed rate over a period of 240 minutes.

The reactor contents were then cooled to 56-60°C, and were fed separately at constant rate at the same time: 45 g of 13 wt% TBHP aqueous solution over a period of 60 min and 145 g of a 12 wt% Bruggolite^{®} FF6 M aqueous solution over a period of 90 min, the contents of the reactor being maintained at 56-60°C.

30 minutes after the end of the above addition, polymerization is over. The resulting mixture was cooled to 35°C, the pH was corrected between 5.0 and 6.0, and 103 g of Aerosol^{®} WA-300 were added into the reactor. After that, the mixture was filtered through a 36 mesh screen and the filtrate was collected. The solid content of the dispersion was set to about 50-53 wt%.

### Example 4: Preparation of comparative dispersion 3

An aqueous dispersion of polymer particles was prepared as follows.

1841 g of deionized water were added in a 10L glass reactor fitted with a condenser, a stirrer, a temperature control system and inlets for nitrogen and the feed solutions.

In another container fitted with a stirrer (pre-emulsifier), a monomer pre-emulsion was prepared with 985 g of deionized water, 188.6 g of Polirol SE 301 and 3911 g of a monomeric mixture comprising 82.7 wt% of 2EHA, 4.6 wt% of ST, 10.9 wt% of MMA and 1.8 wt% of ITA based on the total weight of the monomeric mixture.

When the contents of the reactor have reached a temperature of 66°C, 290 g of the monomer pre-emulsion were added followed by 2.3 g of NaPS dissolved in 20 g of water, then 0.040 g of FeSO₄ and then 1.99 g of NaMBS.

About two minutes after having reached the exothermic peak, the remaining portion of the monomer pre-emulsion, 170 g of a 5 wt% NaPS aqueous solution and 1.15 g of NaBS dissolved in 90 g of water were fed into the reactor at a constant feed rate, over a period of 4.5 hours, taking care to keep the contents of the reactor at a temperature of 68-72°C throughout the feed.

After that, the contents were heated to 78-82°C over a period of 30', and 26 g of ammonia solution were added into the reactor. Keeping the reactor contents at the same temperature, 208 g of a 5 wt% NaPS aqueous solution and 30 g of H₂O₂ diluted with 178 g of water were separately fed into the reactor at a constant feed rate over a period of 240 minutes.

The reactor contents were then cooled to 56-60°C, and were fed separately at constant rate at the same time: 45 g of 13 wt% TBHP aqueous solution over a period of 60 min and 145 g of a 6 wt% Bruggolite^{®} FF6 M aqueous solution over a period of 90 min, the contents of the reactor being maintained at 56-60°C.

30 minutes after the end of the above addition, polymerization is over. The resulting mixture was cooled to 35°C, the pH was corrected between 5.0 and 6.0, and 103 g of Aerosol^{®} WA-300 were added into the reactor. After that, the mixture was filtered through a 36 mesh screen and the filtrate was collected. The solids content of the dispersion was set to about 50-53 wt%.

### Example 5: Preparation of comparative dispersion 4

An aqueous dispersion of polymer particles was prepared as follows.

1691 g of deionized water were added in a 10L glass reactor fitted with a condenser, a stirrer, a temperature control system and inlets for nitrogen and the feed solutions.

In another container fitted with a stirrer (pre-emulsifier), a monomer pre-emulsion was prepared with 885 g of deionized water, 188.6 g of Polirol SE 301 and 3911 g of a monomeric mixture comprising 82.7 wt% of 2EHA, 4.6 wt% of ST, 10.9 wt% of MMA and 1.8 wt% of ITA based on the total weight of the monomeric mixture.

When the contents of the reactor have reached a temperature of 66°C, 290 g of the monomer pre-emulsion were added followed by 2.3 g of NaPS dissolved in 20 g of water, then 0.040 g of FeSO₄ and then 1.99 g of NaMBS.

About two minutes after having reached the exothermic peak, 63.2 g of Polirol AL 1065 dissolved in 89 g of water were added on the remaining portion of the monomer pre-emulsion. Then, this remaining portion of the monomer pre-emulsion, 170 g of a 5 wt% NaPS aqueous solution, 1.15 g of NaBS dissolved in 90 g of water, 26.3 g of ammonia solution and 39.4 g of water were fed into the reactor at a constant feed rate, over a period of 4.5 hours, taking care to keep the contents of the reactor at a temperature of 68-72°C throughout the feed.

After that, the contents were heated to 78-82°C over a period of 30', and 392 g of a 5 wt% NaPS aqueous solution were fed into the reactor at a constant feed rate over a period of 240 minutes.

The reactor contents were then cooled to 56-60°C, and 20 g of ammonia solution were added. Then, were fed separately at constant rate at the same time: 45 g of 13 wt% TBHP aqueous solution over a period of 60 min and 145 g of a 6 wt% Bruggolite^{®} FF6 M aqueous solution over a period of 90 min, the contents of the reactor being maintained at 56-60°C.

30 minutes after the end of the above addition, polymerization is over. The resulting mixture was cooled to 35°C, the pH was corrected between 5.0 and 6.0, and 103 g of Aerosol^{®} WA-300 were added into the reactor. After that, the mixture was filtered through a 36 mesh screen and the filtrate was collected. The solids content of the dispersion was set to about 50-53 wt%.

### Example 6: Preparation of dispersion 5 according to the invention

An aqueous dispersion of polymer particles was prepared as follows.

1691 g of deionized water were added in a 10L glass reactor fitted with a condenser, a stirrer, a temperature control system and inlets for nitrogen and the feed solutions.

In another container fitted with a stirrer (pre-emulsifier), a monomer pre-emulsion was prepared with 885 g of deionized water, 188.6 g of Polirol SE 301 and 3911 g of a monomeric mixture comprising 80.7 wt% of 2EHA, 4.6 wt% of ST, 10.9 wt% of MMA, 2.0 wt% of HEMA and 1.8 wt% of ITA based on the total weight of the monomeric mixture.

When the contents of the reactor have reached a temperature of 66°C, 290 g of the monomer pre-emulsion were added followed by 2.3 g of NaPS dissolved in 20 g of water, then 0.040 g of FeSO₄ and then 1.99 g of NaMBS.

About two minutes after having reached the exothermic peak, 63.2 g of Polirol AL 1065 dissolved in 89 g of water were added on the remaining portion of the monomer pre-emulsion. Then, this remaining portion of the monomer pre-emulsion, 170 g of a 5 wt% NaPS aqueous solution, 1.15 g of NaBS dissolved in 90 g of water, 26.3 g of ammonia solution and 39.4 g of water were fed into the reactor at a constant feed rate, over a period of 4.5 hours, taking care to keep the contents of the reactor at a temperature of 68-72°C throughout the feed.

After that, the contents were heated to 78-82°C over a period of 30', and 392 g of a 5 wt% NaPS aqueous solution were fed into the reactor at a constant feed rate over a period of 240 minutes.

The reactor contents were then cooled to 56-60°C, and 20 g of ammonia solution were added. Then, were fed separately at constant rate at the same time: 45 g of 13 wt% TBHP aqueous solution over a period of 60 min and 145 g of a 6 wt% Bruggolite^{®} FF6 M aqueous solution over a period of 90 min, the contents of the reactor being maintained at 56-60°C.

30 minutes after the end of the above addition, polymerization is over. The resulting mixture was cooled to 35°C, the pH was corrected between 5.0 and 6.0, and 103 g of Aerosol^{®} WA-300 were added into the reactor. After that, the mixture was filtered through a 36 mesh screen and the filtrate was collected. The solids content of the dispersion was set to about 50-53 wt%.

### Example 7: Preparation of comparative dispersion 6

An aqueous dispersion of polymer particles was prepared similarly as Example 6, except that Aerosol^{®} WA-300 was not implemented.

### Example 8: Preparation of dispersion 7 according to the invention

An aqueous dispersion of polymer particles was prepared similarly as Example 6, except that the monomeric mixture comprised 78.9 wt% of 2EHA, 4.6 wt% of ST, 8.7 wt% of MMA, 6.0 wt% of HEMA and 1.8 wt% of ITA based on the total weight of the monomeric mixture.

### Example 9: Properties of dispersions 1-7

The surfactants and monomers implemented for preparing dispersions 1-7 are summarized in Table 1 below, the values being weight percentages with respect to the total weight of the monomeric mixture; for the surfactants, the values are weight percentages calculated based on the solid content of each surfactant with respect to the total weight of the monomeric mixture.

**Table 1**

| **Dispersion** | **1 (comp.)** | **2 (comp.)** | **3 (comp.)** | **4 (comp.)** | **5 (inv.)** | **6 (comp.)** | **7 (inv.)** |
|---|---|---|---|---|---|---|---|
| **Surfactant mixtures** | | | | | | | |
| Polirol SE 301 | 1.5 | 1.5 | 1.5 | 1.5 | 1.5 | 1.5 | 1.5 |
| SURFALIN E OX 1320L | 0.74 | 0.74 | 0 | 0 | 0 | 0 | 0 |
| Polirol AL 1065 | 0 | 0 | 0 | 1.05 | 1.05 | 1.05 | 1.05 |
| Aerosol^{®} WA-300 | 2.0 | 2.0 | 2.0 | 2.0 | 2.0 | 0 | 2.0 |

| **Monomeric mixtures** | | | | | | | |
|---|---|---|---|---|---|---|---|
| 2EHA | 82.5 | 82.7 | 82.7 | 82.7 | 80.7 | 80.7 | 78.9 |
| ST | 4.6 | 4.6 | 4.6 | 4.6 | 4.6 | 4.6 | 4.6 |
| MMA | 10.9 | 10.9 | 10.9 | 10.9 | 10.9 | 10.9 | 8.7 |
| HEMA | 0 | 0 | 0 | 0 | 2.0 | 2.0 | 6.0 |
| AA | 2.0 | 0 | 0 | 0 | 0 | 0 | 0 |
| ITA | 0 | 1.8 | 1.8 | 1.8 | 1.8 | 1.8 | 1.8 |

The properties of dispersions 1-7 were evaluated according to the methods of Example 1 and are indicated in Table 2 below.

**Table 2**

| **Dispersion** | **1 (comp.)** | **2 (comp.)** | **3 (comp.)** | **4 (comp.)** | **5 (inv.)** | **6 (comp.)** | **7 (inv.)** |
|---|---|---|---|---|---|---|---|
| Solids content (wt%) | 51.0 | 50.6 | 50.6 | 52.2 | 52.4 | 52.4 | 51.0 |
| pH | 5.3 | 5.2 | 5.4 | 5.3 | 5.4 | 5.5 | 5.3 |
| Viscosity (mPa.s) | 102 | 53 | 84 | 65 | 86 | 95 | 92 |
| Particle size (nm) | 170 | 274 | 270 | 256 | 220 | 220 | 281 |
| Tg (°C) | -41 | -41 | -44 | -42 | -40 | -40 | -42 |
| Peel adhesion (N/25.4mm) | 3.5 | 3.4 | 2.3 | 2.8 | 3.1 | 3.8 | 4.1 |
| % labels detached after washing | 0 | 6 | 2 | 20 | 62 | 0 | 92 |

Dispersions 5 and 7 according to the invention make it possible to obtain pressure sensitive adhesives intended for manufacturing self-adhesive labels, which can be more effectively detached after immersion in warm water while keeping a sufficient peel adhesion.

Without wishing to be bound by theory, it is believed that the combination of several parameters is important to achieve a significant improvement in the number of detached labels.

In particular, replacing the monocarboxylic acid monomer (AA) by a polycarboxylic acid monomer (ITA) slightly increases the number of labels detached after immersion into warm water (comparison of comparative dispersions 1 and 2).

Furthermore, combining a hydroxy alkyl methacrylate (HEMA) and a polycarboxylic acid monomer (ITA) significantly improves the percentage of detached labels, as evidenced by comparing dispersions 5 and 7 according to the invention with comparative dispersion 4.

Implementing diester sulfosuccinate sodium salts (Aerosol^{®} WA-300) with this specific monomeric mixture and an ethoxylated non-ionic surfactant also has a significant effect on the percentage of detached labels, since this percentage is considerably improved for dispersion 5 according to the invention compared to comparative dispersion 6 (not comprising diester sulfosuccinate sodium salts).

## Claims

1. An aqueous dispersion of polymer particles obtained by emulsion polymerization of a monomeric mixture comprising:
- a) between 50 wt% and 90 wt%, preferably between 65 wt% and 90 wt%, of a C4-C8 alkyl acrylate,
- b) between 2 wt% and 15 wt%, preferably between 3 wt% and 10 wt%, of a vinyl aromatic monomer selected from styrene, o-methylstyrene, m-methylstyrene, p-methylstyrene, α-methylstyrene,o-ethylstyrene, m-ethylstyrene, p-ethylstyrene, p-tert-butylstyrene, o-methyl-p-isopropylstyrene, p-chlorostyrene, p-bromostyrene, o,p-dichlorostyrene, o,p-dibromostyrene, o-methoxystyrene, m-methoxystyrene, p-methoxystyrene, optionally substituted vinylnaphthalenes, 2-vinyl anthracene, and mixtures thereof,
- c) between 2 wt% and 20 wt%, preferably between 6 wt% and 16 wt%, of a C1-C2 alkyl (meth)acrylate,
- d) between 1 wt% and 15 wt%, preferably between 1.0 wt% and 10 wt%, of a hydroxy C2-C8 alkyl (meth)acrylate,
- e) between 1 wt% and 5 wt%, preferably between 1.0 wt% and 3.5 wt%, of an ethylenically unsaturated polycarboxylic acid and/or a salt thereof, and
- f) optionally up to 30 wt%, preferably up to 20 wt%, of an ethylenically unsaturated monomer different from a), b), c), d) and e) as defined above,
wherein the aqueous dispersion further comprises a surfactant mixture comprising a monoester sulfosuccinate salt, a diester sulfosuccinate salt and an ethoxylated and/or propoxylated non-ionic surfactant,
the weight percentages being with respect to the total weight of the monomeric mixture.

2. The aqueous dispersion according to claim 1, the aqueous dispersion exhibiting a glass transition temperature of at most -10°C, preferably at most -20°C, more preferably at most -25°C.

3. The aqueous dispersion according to claim 1 or 2, wherein the monomer d) is selected from hydroxyethyl (meth)acrylate, hydroxypropyl (meth)acrylate, hydroxybutyl (meth)acrylate, and mixtures thereof, preferably 2-hydroxyethyl (meth)acrylate, 3-hydroxypropyl (meth)acrylate, 4-hydroxybutyl (meth)acrylate, and mixtures thereof, more preferably 2-hydroxyethyl methacrylate, 3-hydroxypropyl methacrylate, 4-hydroxybutyl methacrylate, and mixtures thereof, in particular 2-hydroxyethyl methacrylate.

4. The aqueous dispersion according to any one of claims 1 to 3, wherein the monomer e) is an ethylenically unsaturated dicarboxylic acid and/or a salt thereof, the ethylenically unsaturated dicarboxylic acid being selected from maleic acid, dimethylmaleic acid, fumaric acid, itaconic acid, tetrahydrophthalic acid, citraconic acid, mesaconic acid, and mixtures thereof, preferably from maleic acid, fumaric acid, itaconic acid, and mixtures thereof, preferably from maleic acid, fumaric acid, itaconic acid, and mixtures thereof, in particular itaconic acid.

5. The aqueous dispersion according to any one of claims 1 to 4, wherein the total content of the monoester sulfosuccinate salt is comprised between 0.1 % and 5 % by weight with respect to the total weight of the monomeric mixture, the monoester sulfosuccinate salt being advantageously a monoalkylester sulfosuccinate salt which is optionally ethoxylated, preferably an ethoxylated monoalkylester sulfosuccinate salt wherein the alkyl group comprises 6 to 15 carbon atoms.

6. The aqueous dispersion according to any one of claims 1 to 5, wherein the total content of the diester sulfosuccinate salt is comprised between 0.5 % and 5 % by weight with respect to the total weight of the monomeric mixture, the diester sulfosuccinate salt being advantageously a dialkylester sulfosuccinate salt which is optionally ethoxylated, preferably a dialkylester sulfosuccinate salt which is not ethoxylated wherein the alkyl group in each ester moiety independently comprises 4 to 13 carbon atoms.

7. The aqueous dispersion according to any one of claims 1 to 6, wherein the total content of the ethoxylated and/or propoxylated non-ionic surfactant is comprised between 0.01 % and 5 % by weight with respect to the total weight of the monomeric mixture, the ethoxylated and/or propoxylated non-ionic surfactant being advantageously selected from ethoxylated and/or propoxylated alcohols, preferably ethoxylated and/or propoxylated C8-C20 monoalcohols.

8. The aqueous dispersion according to any one of claims 1 to 7, wherein the polymer particles of the aqueous dispersion are obtained by emulsion polymerization of the monomeric mixture in the presence of an initiator.

9. A process for preparing the aqueous dispersion according to any one of claims 1 to 8 comprising emulsion polymerization of a monomeric mixture to obtain polymer particles, said polymerization comprising:
- emulsifying the monomeric mixture in water with at least one surfactant of a surfactant mixture to provide a monomeric pre-emulsion, then
- contacting the monomeric pre-emulsion with an initiator,
wherein the monomeric mixture and the surfactant mixture are as described for the aqueous dispersion according to any one of claims 1 to 8, and
wherein each of the surfactants of the surfactant mixture is implemented during the emulsion polymerization and/or after the emulsion polymerization.

10. An adhesive composition comprising the aqueous dispersion according to any one of claims 1 to 8.

11. Use of the adhesive composition according to claim 10 as a water-debondable pressure sensitive adhesive.

12. An article comprising the adhesive composition according to claim 10.

13. A multilayer system comprising the adhesive composition according to claim 10, said composition being a pressure sensitive adhesive.

14. A self-adhesive product obtainable from the multilayer system according to claim 13.

15. A process for recycling an article comprising the adhesive composition according to claim 10, said composition bonding at least two substrates of the article, comprising a step of immersing the article in a warm aqueous solution and a step of debonding the substrates bonded by the adhesive composition.
